Europäisches Patentamt

(19) European Patent Office

Office européen des brevets

(11) Publication number: **0 189 973**
**A1**

## (12) EUROPEAN PATENT APPLICATION

(21) Application number: **86300103.8**

(22) Date of filing: **08.01.86**

(51) Int. Cl.⁴: **B 64 D 15/16**

(30) Priority: **25.01.85 GB 8501858**

(43) Date of publication of application:
**06.08.86 Bulletin 86/32**

(84) Designated Contracting States:
**DE FR GB**

(71) Applicant: **The Secretary of State for Defence in Her Britannic Majesty's Government of The United Kingdom of Great Britain and Northern Ireland Whitehall London SW1A 2HB(GB)**

(72) Inventor: **Cansdale, James Timothy 18 Barbara Close Church Crookham Aldershot Hampshire(GB)**

(74) Representative: **Beckham, Robert William et al, Procurement Executive Ministry of Defence Patents 1A(4), Room 2014 Empress State Building Lillie Road London SW6 1TR(GB)**

(54) Inflatable deicer.

(57) The invention provides an elongate inflatable deicer comprising inflatable compartment or compartments, (21), of composite structure, the compartment or compartments including an elastic wall (26) and a strip or filaments, (22), or series thereof, incorporated in the elastic wall and of higher modulus than the wall, wherein all or part of the strip, filament or series thereof extend at an acute angle or angles to the longitudinal axis of the compartment when uninflated.

EP 0 189 973 A1

Croydon Printing Company Ltd

Ref P0108

INFLATABLE DEICER

The present invention relates to inflatable deicers and particularly, though not exclusively, relates to inflatable deicers for removing ice from the leading edge of aerofoils.

The formation of ice on the forward facing surfaces of aircraft and other structures has been extensively studied over a long period and a number of solutions to the problem arising from ice formation have been proposed. Chemical, mechanical and electrical methods of ice removal have been tried with varying degrees of success. Inflatable tubes, termed 'pneumatic boots', have been used for ice removal on aircraft wings and helicopter rotor blades.

The main disadvantages of pneumatic boots which are currently in use on aerofoils are that the boot has to be inflated to such a large volume that significant degradation of the aerodynamic performance of the aerofoil occurs. Under certain conditions, spanwise ice strips are left on the boot after several inflation/deflation cycles, and new ice may form in spaces between the ice strips preventing deflation.

The present invention provides an inflatable deicer with improved ice removal performance compared with known pneumatic boot deicers.

According to the present invention an inflatable deicer comprises an elongate, inflatable compartment or compartments of composite structure, the tube or each tube including an elastic wall and a strip or filament, or a series of strips or filaments, incorporated in the wall and of higher tensile modulus than the wall, wherein all or part of the strip, filament or series thereof extend at an acute angle or angles to the longitudinal axis of the compartment when uninflated.

The compartment or compartments of the deicer may be partly composed of natural or synthetic rubber. The strips or filaments may be composed of KEVLAR (RTM), polyester, or glass, or may be metal or metallic wires.

The strips or filaments may be curved, or form a chevron or zig-zag arrangement when the compartment is uninflated.

Embodiments of the invention will now be described by way of example only with reference to the drawings of which:-

Figure 1 shows a perspective view of a known inflatable deicer.

Figures 2 to 5 show ice formation and shedding on a known inflatable deicer seen in cross-section.

Figures 6A and 6B show part of an inflatable deicer in accordance with the invention, in front view and cross section respectively.

Figures 7A and 7B show corresponding views of the deicer of Figure 6 when inflated.

Figure 8 shows a chevron formation of filaments for a further deicer in accordance with the invention.

Figure 9 shows a zig-zag formation of filaments for another deicer in accordance with the invention.

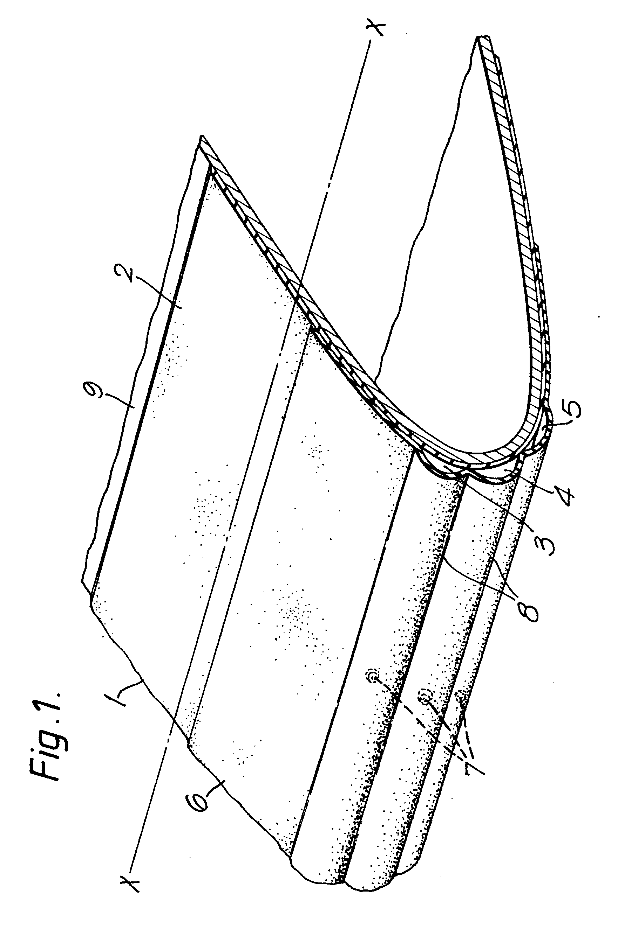

Figure 1 shows part of a known inflatable deicer 1 attached to the leading edge of an aircraft wing 9 having a spanwise axis X-X. The deicer comprises a curved body 2 of sheet rubber which is bonded to the wing leading edge, and an outer cover 6 also of sheet rubber, which is bonded to the body 2 at upper and lower edge portions of the cover 6 and along two spanwise extending seams 8. In use, the outer cover is inflated via valves 7 which extend through the wing 9 and cover 2, to form three spanwise extending bulbous compartments 3, 4 and 5, which are sealed at their ends (not shown).

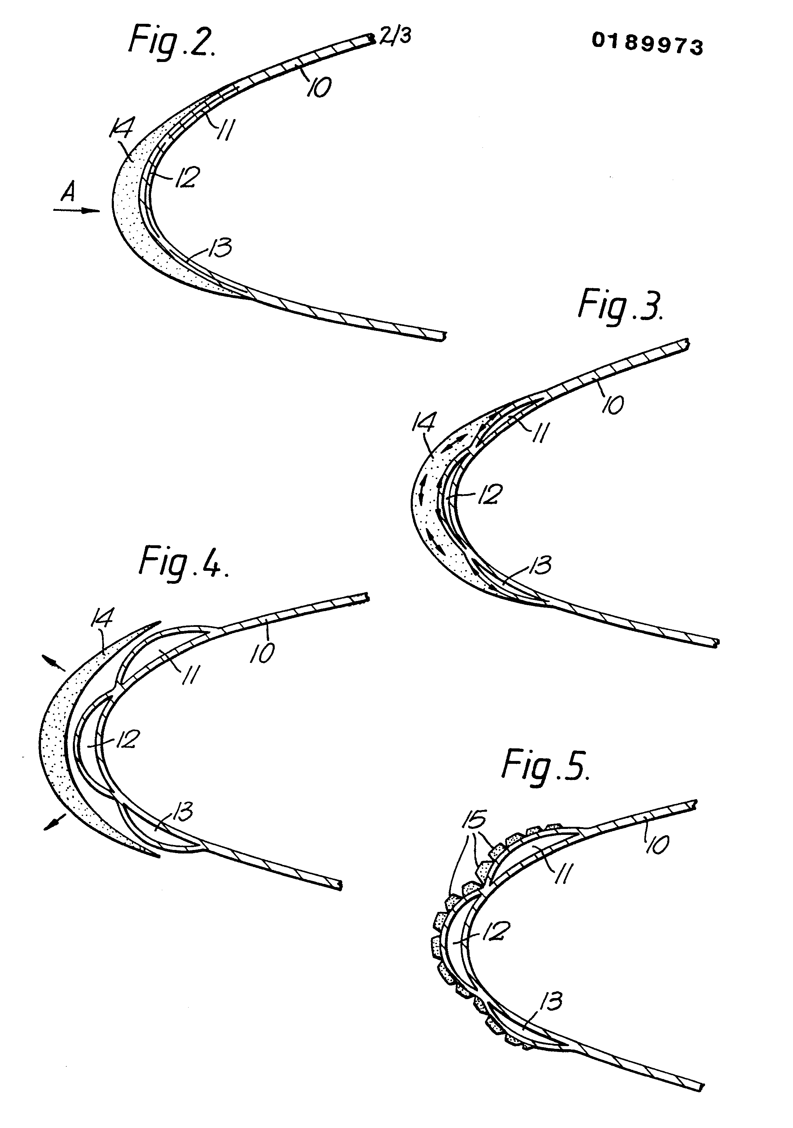

Figure 2 shows a deicer 10 which is similar to the deicer of Figure 1 and has deflated compartments 11, 12 and 13 which extend in a spanwise direction. As shown in Figure 2, a layer of ice adheres to the leading edge of the deicer 10. Figure 3 shows the deicer 10 with the compartments 11, 12, 13 partially inflated resulting in tensile and other stresses in the adhering ice layer 14. Figure 4 shows the deicer 10 when fully inflated, resulting in shedding of the entire ice layer 14. In practice a sufficiently thick layer of ice is allowed to form so that on inflation of the deicer the interfacial shear at the surface of the deicer is dominant and detachment of the ice takes place cleanly from the surface. If the ice is too thin, cohesive failure in tension will occur and the ice layer will be broken into a series of spanwise strips 15 as seen in Figure 5. If this occurs new ice may form in the spaces between the ice strips 15 and inhibit deflation of the deicer.

In known deicers of the type described above, the shear strain which can be applied at the ice layer/deicer interface is limited by the maximum permissible inflation of the deicer compartments, which in turn is dependent on aerodynamic considerations. It has been found, particularly for small aerofoils such as helicopter rotor blades that inflation of the deicer compartments can cause significant degradation of aerodynamic performance, for example, by causing increased drag or reduced stall boundaries, even without the presence of an ice layer.

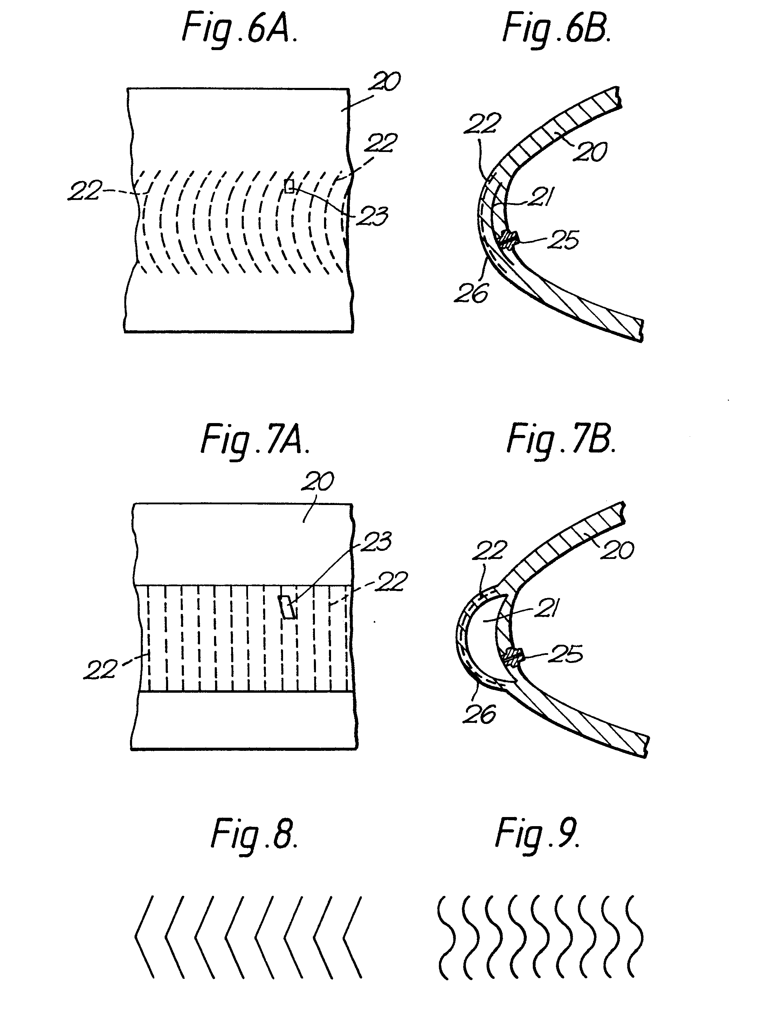

Figures 6A and 6B show a wing deicer in accordance with the invention, which includes a body 20 of sheet rubber having a spanwise extending inflatable compartment 21 (shown deflated) which is inflated via a tube 25 from the interior of the wing. A series of curved filaments 22 composed of 'KEVLAR' which has a significantly higher tensile modulus than the rubber body 20, are embedded in the leading edge portion 26 of the body 20 as as may be seen in Figure 6A. The filaments are equispaced from each other and substantially all parts of each filament are at an acute angle to the spanwise axis Y-Y of the deicer when deflated. When the compartment 21 is inflated, as shown in Figure 7B, the filaments 22 straighten out as shown in Figure 7A, and the leading edge portion 26 of the body 20 stretches in both chordwise and spanwise directions as indicated by a surface element 23 in Figures 6A and 7A. For a given volumetric inflation, shear loading at the interface between an ice layer on the surface of leading edge portion 26 of the deicer 20 will be higher than for an equivalent deicer which is composed solely of rubber or other elastic material, ie a deicer which is orthotropic, and its ice removal performance will be greater than the equivalent deicer.

Figures 8 and 9 show alternative layouts for the filaments in the embodiment of Figure 6 and 7. Figure 8 shows a chevron arrangement of filaments 27, and Figure 9 shows a zig-zag arrangement of filaments 28.

In a particular embodiment having filaments in a chevron arrangement with the filaments at $45^{\circ}$ to the spanwise axis, a 22% increase in ice shedding performance may be obtained. The invention may be applied to multi-compartment deicers such as the three-compartment deicer of Figure 1.

The optimum filament or strip pattern is dependent on the permissible shape of the deicer when inflated; generally, the greater the allowable inflated volume the greater the ice removal performance.

CLAIMS

1.   An inflatable deicer comprising an elongate inflatable
compartment or compartments of composite structure, the compartment
or compartments including an elastic wall, and a strip or filament,
or a series of strips or filaments, incorporated in the wall and of
higher modulus than the wall, wherein all or part of the strip,
filament or series thereof extend at an acute angle or angles to
the longitudinal axis of the compartment when uninflated.

2.   An inflatable deicer was claimed in claim 1 wherein the
compartment or compartments of the deicer are composed of natural
or synthetic rubber.

3.   An inflatable deicer as claimed in claim 1 or claim 2 wherein
the strips or filaments are composed of KEVLAR (RTM) polyester, or
glass.

4.   An inflatable deicer as claimed in claim 1 or claim 2 wherein
the strips or filaments are metal or metallic wires.

5.   An inflatable deicer as claimed in any of the preceding claims
wherein the strips or filaments are curved.

6.   An inflatable deicer as claimed in any of claims 1 to 4 wherein
the strips or filaments form a chevron or zig-zag arrangement when
the compartment is uninflated.

7.   An inflatable deicer substantially as herein described with
reference to Figures 6 to 9 of the drawings.

8.   An aircraft wing including an inflatable deicer as claimed in
any of the preceding claims.

9.   A helicopter rotor blade including an inflatable deicer as claimed in any of claims 1 to 7.

Fig.1.

Fig.2.

Fig.3.

Fig.4.

Fig.5.

0189973

2/3

*Fig.6A.*

*Fig.6B.*

*Fig.7A.*

*Fig.7B.*

*Fig.8.*

*Fig.9.*

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | GB-A- 618 913 (GOODRICH) <br> * Page 1, lines 11-13; page 2, lines 5-33, 69-127; page 3, lines 9-27, 48-79; figures 1,2,4 * | 1-8 | B 64 D 15/16 |
| | --- | | |
| X | US-A-2 446 328 (HESTON) <br><br> * Column 2, line 29 - column 3, line 50; figures 1-5 * | 1-3,5, 7,8 | |
| | ----- | | |
| | | | **TECHNICAL FIELDS SEARCHED (Int. Cl.4)** |
| | | | B 64 D |

The present search report has been drawn up for all claims

| Place of search | Date of completion of the search | Examiner |
|---|---|---|
| THE HAGUE | 25-04-1986 | ZERI A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82